# EUROPEAN PATENT APPLICATION

(11) **EP 4 804 090 A1**
(43) Date of publication of application: **09.09.2026**
(21) Application number: 25382207.6
(22) Date of filing: 07.03.2025
(51) Int. Cl.: G06N 10/70, G06N 10/40, G06N 10/20

(54) **METHOD AND QUANTUM HARDWARE FOR QUANTUM ERROR CORRECTION**

(71) Applicant: IQM Finland Oy, 02150 Espoo (FI)
(72) Inventor: VIGNEAU, Florian, 80992 Munich (DE); MAJUMDER, Sourav, 80992 Munich (DE); ANIKET, Rath, 80992 Munich (DE); KINDEL, William, 80992 Munich (DE); FERNANDES PEREIRA, Francisco Revson, 80992 Munich (DE); HEINSOO, Johannes, 02150 Espoo (FI); PARRADO, Pedro, Madrid, Comunidad de Madrid, 28046 (ES)
(74) Representative: Leinweber & Zimmermann

(57) **Abstract**

A method for quantum error detection and/or correction according to a quantum error correction code that comprises at least one stabilizer operator acting on at least two data qubits (11), the method comprising:
providing a quantum hardware (100, 100', 1000, 1000a, b, c, d, e) which comprises the at least two data qubits (11), a syndrome qubit (12a, b) and a multiqubit coupler (1) for the qubits (11, 12a, b);
operating the qubits (11, 12a, b) and the multiqubit coupler (1) according to a syndrome measurement circuit associated with the at least one stabilizer operator to thereby retrieve an error syndrome of a quantum state of the data qubits (11) associated with the at least one stabilizer operator.

## Description

The present invention is related to a method and a quantum hardware for quantum error detection and/or correction.

One main problem of quantum computation is inevitable noise that affects the execution of every quantum algorithm on a quantum hardware. One possible approach to address this problem is quantum error correction (QEC) where a quantum state of logical qubits is encoded into a state of physical data qubits according to a quantum error correction code in a way that makes it resilient against the effect of noise. A prominent class of quantum error correction codes are stabilizer codes, where the code space is the +1-eigenspace of so-called stabilizer operators which are elements of the Pauli group. In a quantum error correction cycle of a stabilizer code, the stabilizer operators are measured. A measurement outcome of -1 indicates that an error has occurred. Stabilizer codes may also provide a way to correct the error. A stabilizer code is completely characterized by its stabilizer operators.

In general, each stabilizer operator of a quantum error correction code is acting on a plurality of data qubits. Within this specification we also say that these data qubits are associated with the stabilizer operator. The measurement of each multi-qubit stabilizer operator may be physically realized by associating a syndrome qubit to the stabilizer operator and by applying a syndrome measurement circuit to the data and syndrome qubits. In general, applying the syndrome measurement circuit comprises successively applying a two-qubit gate between the syndrome qubit and each data qubit in the support of the stabilizer operator followed by measuring a quantum state of the syndrome qubit. Thereby, an error syndrome of the data qubits associated with the stabilizer operator may be retrieved. The quantum state of the syndrome qubit may be preferably measured in the Z-basis (see, e.g., M. Nielsen, I. Chuang, "Quantum computation and quantum information", Cambridge University Press, 2000).

While such a syndrome measurement circuit exists for every stabilizer operator, the execution on a quantum hardware may be challenging in practice. The syndrome measurement circuit disclosed in M. Nielsen, I. Chuang, "Quantum computation and quantum information" cited above requires a connectivity between the syndrome qubit and each of the data qubits in the support of the stabilizer operator. Such a connectivity may be beyond the connectivity of available quantum hardware, in particular for QEC codes with high-weight stabilizer operators. (The weight of a stabilizer operator is the number of data qubits in its support). If this connectivity is not provided by the quantum hardware, the syndrome measurement circuit may become much more complicated, requiring an overhead in qubits and quantum gates that are themselves noisy and thereby reduce the overall performance of the quantum error correction code.

One possibility to overcome these problems is to find quantum error correction codes that are adapted to the connectivity of the available quantum hardware. A prominent example is presented in A. Fowler, et.al "Surface codes: Towards practical large-scale quantum computation", PRA 86.3 (2012): 032324. There it is shown that the surface code may be implemented on a quantum hardware where the data qubits are arranged in a square lattice, each face of four qubits of the lattice is associated with a syndrome qubit arranged at the center of the face, and there is connectivity between the syndrome qubit and each of the four data qubits at the face. The syndrome measurement circuit for each stabilizer operator comprises a sequence of CNOT gates between each of the data qubits and the syndrome qubit at the face. Finally, the syndrome qubit is measured to extract the error syndrome.

Many powerful quantum error correction codes that may outperform the surface code on other QPU architectures in terms of logical error rate for a given number of qubits require a degree of qubit connectivity which is beyond the above-mentioned example. For example, there are planar codes with stabilizer operators having a weight of 6, 8 or even 12 (see for example A. Landal et.al "Fault-tolerant quantum computing with color codes." arXiv: 1108.5738 (2011), F. Thomsen et.al "Low-overhead quantum computing with the color code", Physical Review Research 6.4 (2024): 043125). A further example of QEC codes with high-weight stabilizer operators are Quantum Low Density Parity Check Codes (QLDPC), see e.g., S. Bravyi et.al "High-threshold and low-overhead fault-tolerant quantum memory", Nature 627.8005 (2024): 778-782. Furthermore, some quantum error correction codes, including color codes, are more efficient if multiple error types (usually X- and Z-type errors) may be measured at the same time, for example by providing more than one syndrome qubit having connectivity with the same set of data qubits. These codes do not map to a locally connected 2D array of qubits in a natural way.

In N. Lacroix et.al "Scaling and logic in the color code on a superconducting quantum processor", arXiv 2412.14256 (2024), it is described how to implement a 6.6.6 color code with weight-6 stabilizer operators using a square-grid qubit topology. As the square-grid topology only provides connectivity between nearest neighbours (four qubits), a special measurement circuit, a so-called "superdense color code circuit" (see also C. Gidney and C. Jones "New circuits and an open-source decoder for the color code", arXiv 2312.08813 (2023)) is demonstrated for measuring the weight-6 stabilizer operators on the square-grid topology. Similar ideas have been developed e.g. in Y. Takada and K. Fuji "Improving threshold for fault-tolerant color code quantum computing by flagged weight optimization" PRX Quantum 5.3 (2024): 030352 and C. Chamberland et.al "Triangular color codes on trivalent graphs with flat qubits", New Journal of Physics 22.2 (2020): 023019. The required syndrome measurement circuits are intricate and have an overhead in runtime and/or qubit count.

Thus, there is at present a lack of methods and quantum hardware for efficiently implementing many powerful quantum error correction codes.

Due to these problems in the prior art, it is therefore an object of the present invention to provide a method and a quantum hardware that allows for an implementation of quantum error-correction codes with an improved performance.

According to a first aspect of the present invention there is provided a method for quantum error detection and/or correction according to a quantum error correction code that comprises at least one stabilizer operator acting on at least two data qubits, the method comprising:
providing a quantum hardware which comprises the at least two data qubits, a syndrome qubit and a multiqubit coupler for the qubits;
operating the qubits and the multiqubit coupler according to a syndrome measurement circuit associated with the at least one stabilizer operator to thereby retrieve an error syndrome of a quantum state of the data qubits associated with the at least one stabilizer operator.

The method according to the first aspect of the present invention allows to efficiently implement quantum error correction codes with stabilizer operators having a high weight, for example 4, 5, 6, 7, 8, 9, 10 or even higher by operating the qubits and the multiqubit coupler according to the syndrome measurement circuit which has a simple structure as will be shown below. The weight of the stabilizer operators is only limited by the coupling ability of the multiqubit coupler. The quantum hardware comprises a number of data qubits which is equal to the weight of the stabilizer operator. I.e., the at least two data qubits may be two, three, four, five, six, seven, eight, nine, ten or more data qubits in one example. Quantum error correction codes with high-weight stabilizer operators may have favorable error detection and correction properties. Multiqubit couplers for more than four qubits are known in the art. Examples of multiqubit couplers will be presented below. In particular, the interactions between the qubits and the qubits and the multiqubit coupler involve the multiqubit coupler. In certain examples, the execution of the syndrome measurement circuit may not require a direct connectivity between the syndrome qubit and the data qubits.

Operating the qubits may further comprise preparing the syndrome qubit (which may also be called ancilla qubit, stabilizer qubit or measure qubit) in a pre-determined initial quantum state. To this end, the quantum hardware may comprise state preparation means. Furthermore, retrieving the error syndrome the quantum state of the data qubits associated with the at least one stabilizer operator comprises a readout of the syndrome qubit. To this end, the quantum hardware may comprise measurement means. The error syndrome is indicative of the presence or absence of an error in the data qubits associated with the stabilizer operator. The readout of the error syndrome therefore allows for error detection. In one example, the method may further comprise operating the qubits and the multiqubit coupler in accordance with an error correction circuit associated with the error syndrome to thereby correct the error in the quantum state of the at least two data qubits.

The syndrome measurement circuit may comprise instructions to prepare the syndrome qubit in the pre-determined initial quantum state, a sequence of quantum gates to be applied to the qubits, and in some cases to the multiqubit coupler, and a measurement of the syndrome qubit. In one expedient example, the sequence of quantum gates comprises single- and two-qubit gates.

In one embodiment of the method according to the first aspect of the present invention, the multiqubit coupler may comprise at least one of a qubit, a waveguide, a tunable coupler and/or a shunting capacitor. Additionally, or alternatively, the qubits may be superconducting qubits. In particular, the qubits may be transmons. When the multiqubit coupler comprises a qubit, the qubit may be a superconducting qubit, and in particular a transmon in one example. In other examples, the multiqubit coupler may comprise any other quantum mechanical two-level system wherein the two levels are separated by an energy gap. In particular, the multiqubit coupler may comprise a resonator or a waveguide, and the quantum mechanical two-level system may be provided by a bosonic mode of the resonator/waveguide being occupied or empty. Resonators or waveguides allow to couple to a large number of qubits, for example, 4, 5, 6, 7, 8, 9, 10 qubits or beyond. Furthermore, resonators or waveguides with high quality are easy to fabricate and may therefore provide useful multiqubit couplers. In one example, the multiqubit coupler may comprise a shunting capacitor which is a classical element for coupling the qubits. In one example, the multiqubit coupler may comprise a qubit or a resonator or a waveguide and a plurality of tunable couplers for coupling each of the data qubits and the qubit or the resonator or the waveguide of the multiqubit coupler. Engineering couplings between superconducting qubits and superconducting qubits and resonators/ waveguides is known in the art, see for example, P. Krantz et.al, "A quantum engineer's guide to superconducting qubits", arXiv: 1904.06560.

In a further embodiment of the method according to the first aspect of the present invention, the quantum error correction code may comprise at least one further stabilizer operator acting on a set of the data qubits of the at least two data qubits, wherein the quantum hardware may comprise a further syndrome qubit associated with the at least one further stabilizer operator, and operating the qubits and the multiqubit coupler may comprise retrieving an error syndrome of a quantum state of the data qubits associated with the at least one further stabilizer operator. The multiqubit coupler is for the at least two data qubits, the syndrome qubit and the further syndrome qubit. For each further stabilizer operator, retrieving the error syndrome comprises a readout of the further syndrome qubit associated with the further stabilizer operator. In one example, the at least one stabilizer operator and the further stabilizer operator may act on the same data qubits. I.e., the set of data qubits consists of the at least two data qubits. In another example, the further stabilizer operator may act on a true subset of the data qubits on which the at least one stabilizer operator acts. I.e., the set of the data qubits is a true subset of the at least two data qubits. In yet another embodiment, there may be a plurality of further stabilizer operators, e.g., two, three, four, five or more further stabilizer operators, each acting on an associated set of qubits of the data qubits. The associated sets of data qubits may be the same for each further stabilizer operator, and optionally the same as the at least two data qubits in one example. In another example, at least two associated sets of data qubits may be different from each other. Then, the quantum hardware may comprise for each further stabilizer operator an associated further syndrome qubit, the multiqubit coupler is also for all further syndrome qubits, and operating the qubits and the multiqubit coupler may comprise for each further stabilizer operator retrieving an error syndrome of a quantum state of the data qubits associated with the further stabilizer operator. For each further stabilizer operator, retrieving the error syndrome of the quantum state of the data qubits associated with the further stabilizer operator comprises measuring the associated further syndrome qubit. This embodiment allows to reduce the runtime of the syndrome measurement circuit, as a readout/measurement of each syndrome qubit may be carried out either in parallel with operating other syndrome qubits, data qubits and the multiqubit coupler, or all syndrome qubits may be measured simultaneously at the end of the syndrome measurement circuit.

In one embodiment of the method according to the first aspect of the present invention, operating the qubits and the multiqubit coupler may comprise individually manipulating a quantum state of one of the qubits and/or the multiqubit coupler, and/or modulating a coupling strength between one of the qubits and the multiqubit coupler. In one example, this may comprise driving and/or tuning the qubits and/or the multiqubit coupler. In one example this may include switching off the interaction between the multiqubit coupler and any of the qubits. In one example, the qubits and/or the multiqubit coupler may be flux-tunable, and tuning may comprise applying a flux to the qubits and/or the multiqubit coupler. In one example, driving of the qubits and/or the multiqubit coupler may comprise applying a microwave drive pulse. In particular, operating the qubits may comprise applying a resonant microwave pulse which changes an internal state of the qubit, an off-resonant microwave field or modulating a qubit frequency by applying a current to a fluxline coupled to the qubit or some other means. Modulating the coupling strength may comprise applying a control pulse or a current bias to a control line of the multiqubit coupler and/or a control line of the qubit. All these techniques are known for operating superconducting qubits, tunable couplers, resonators, waveguides, etc.

In one example, the method may comprise operating the qubits or the multiqubit coupler individually to thereby implement a single-qubit gate, and in particular a Hadamard gate.

According to yet another embodiment of the method according to the first aspect of the present invention, retrieving the error syndrome may comprise transferring a quantum state of the syndrome qubit to the multiqubit coupler, successively implementing a two-qubit gate between the multiqubit coupler and each of the at least two data qubits, transferring the quantum state of the multiqubit coupler back to the syndrome qubit and measuring the quantum state of the syndrome qubit. According to this embodiment, the multiqubit coupler acts as a computational element, and in particular comprises a quantum mechanical two-level system wherein the two levels are separated by an energy gap. In one example, the quantum state of the syndrome qubit to be transferred to the multiqubit coupler is a predefined quantum state. In one example, the quantum state of the syndrome qubit to be transferred to the multiqubit coupler is the |+〉 state, wherein $\left|+\right〉 = \frac{1}{\sqrt{2}} \left(\left|0\right〉+\left|1\right〉\right)$. In one example, the method may comprise preparing the syndrome qubit in the predefined quantum state (e.g., the |+〉 state) before transferring the predefined quantum state of the syndrome qubit to the multiqubit coupler. The (predefined) quantum state of the syndrome qubit is transferred to the multiqubit coupler, and by successively implementing a two-qubit gate between each data qubit and the multiqubit coupler, the quantum state of the multiqubit coupler is adjusted in accordance with an error syndrome of the data qubits associated with the at least one stabilizer operator. Then, the (adjusted) quantum state of the multiqubit coupler is transferred back to the syndrome qubit. Finally, the quantum state of the syndrome qubit is measured. As a result, the error syndrome of the data qubits associated with the at least one stabilizer operator may be retrieved.

In particular, the multiqubit coupler comprises a quantum mechanical two-level system in this embodiment and this quantum mechanical two-level system is used as a computational element for storing quantum information. In one example, the quantum mechanical two-level system is a qubit, for example, a superconducting qubit, and in particular a transmon. Then, operating the qubits and the multiqubit coupler may comprise implementing a SWAP-like gate, for example a SWAP gate or an iSWAP-gate between the syndrome qubit and the qubit of the multiqubit coupler, in particular to transfer a quantum state between the syndrome qubit and the multiqubit coupler. In another example, the multiqubit coupler comprises a waveguide or a resonator. Then, operating the qubits and the multiqubit coupler may comprise a MOVE-gate to transfer the quantum state between the syndrome qubit and the multiqubit coupler. The MOVE-gate is equivalent to an iSWAP gate with the condition that either the syndrome qubit or the resonator/waveguide is in the lower energy state of the two computational states before the MOVE-gate is applied. M. Algaba et.al, "Co-Design quantum simulation of nanoscale NMR" explains the MOVE-gate (called iSWAP-gate in this publication). Implementing the MOVE-gate may comprise applying a flux pulse to the syndrome qubit in one example.

Implementing the two-qubit gate between the data qubit and the multiqubit coupler may further comprise applying a flux pulse in one example. In particular, the two-qubit gate is an entangling gate in one example, for example a controlled-PHASE (CPHASE) gate. If the multiqubit coupler comprises a resonator/waveguide, and the syndrome measurement circuit requires an application of a Hadamard gate, the Hadamard gate must be applied to the qubits. In particular, the Hadamard gate must be applied to the qubits before the first MOVE gate or/and after the second MOVE gate in one example.

In yet another embodiment of the method according to the first aspect of the present invention, retrieving the error syndrome may comprise successively implementing a two-qubit gate between the syndrome qubit and each of the at least two data qubits mediated by the multiqubit coupler. In this embodiment, the multiqubit coupler acts as a mediator of the interaction between the syndrome qubit and the data qubits and does not act as an information storage. In particular, the two-qubit gate is an entangling gate in one example, for example a controlled-PHASE gate.

In another embodiment of the method according to the first aspect of the present invention, the quantum hardware may comprise for each syndrome qubit an associated flag qubit for retrieving an error in the operation of the qubits and the multiqubit coupler according to the syndrome measurement circuit, and wherein the method further comprises operating the qubits and the multiqubit coupler to thereby retrieve an error associated with the syndrome measurement circuit. The operation of the syndrome and data qubits according to the syndrome measurement circuit is susceptible to errors, e.g., due to noisy operations or an influence of the environment on the quantum state of the syndrome qubit. Such errors are detrimental to quantum error correction. The present embodiment therefore improves the reliability of the quantum error detection and/or correction. Retrieving the error associated with the syndrome measurement circuit may comprise a read-out of each flag qubit to thereby obtain the error. To this end, the quantum hardware may comprise measurement means.

In one example of the embodiment, retrieving the error associated with the syndrome measurement circuit may comprise transferring the quantum state of the syndrome qubit to the multiqubit coupler and implementing a two-qubit gate between the multiqubit coupler and the flag qubit. In this case, the multiqubit coupler comprises a quantum mechanical two-level system, wherein the two energy levels are separated by an energy gap. In one example, the quantum state of the syndrome qubit to be transferred to the multiqubit coupler is a predefined quantum state. In one example, the quantum state of the syndrome qubit to be transferred to the multiqubit coupler is the |+〉 state.

In the example, the method comprises operating the qubits and the multiqubit coupler according to a syndrome measurement circuit associated with the at least one stabilizer operator to thereby retrieve the error syndrome of the quantum state of the data qubits associated with the at least one stabilizer operator and operating the qubits and the multiqubit coupler to retrieve the error associated with the syndrome measurement circuit. In one example, the retrieving may comprise:
transferring a quantum state of the syndrome qubit (which may be the |+〉 state, in one example) to the multiqubit coupler;
implementing a first two-qubit gate between the multiqubit coupler and the flag qubit;
successively implementing a two-qubit gate between the multiqubit coupler and each of the data qubits to thereby adjust the quantum state of the multiqubit coupler in accordance with an error syndrome of the quantum state of the data qubits associated with the stabilizer operator;
implementing a second two-qubit gate between the syndrome qubit and the flag qubit so that the implementation of the first and second two-qubit gates adjusts the quantum state of the flag qubit in accordance with an error in the syndrome measurement circuit;
transferring the quantum state of the multiqubit coupler back to the syndrome qubit.

Then, a readout of the state of the syndrome qubit allows to retrieve the error syndrome of the data qubits associated with the at least one stabilizer operator, and a readout of the state of the flag qubit allows to retrieve the error associated with the syndrome measurement circuit.

In another example, retrieving the error associated with the syndrome measurement circuit may comprise implementing a two-qubit gate between the syndrome qubit and the flag qubit mediated by the multiqubit coupler. In this example, the multiqubit coupler may be understood as a mediator of the interaction between the syndrome qubit and the data qubits and not as an information storage.

The quantum error correction code is not limited in the above invention. In one particular embodiment, the quantum error correction code is a color code, a quantum low density parity check code, a subsystem code or a Floquet code.

According to a second aspect of the present invention, there is provided a quantum hardware for quantum error correction according to a quantum error correction code that comprises a plurality of stabilizer operators defined on a two-dimensional qubit lattice with vertices and faces defined by sets of vertices, wherein a data qubit is arranged at each of the vertices, each face is associated with the data qubits at the vertices that define the face, and each stabilizer operator is associated with one of the faces so as to act only on a set of the data qubits that are associated with the face, characterized in that the quantum hardware comprises a plurality of data qubits arranged according to the qubit lattice and further comprises for each face associated with a stabilizer operator a syndrome qubit and a multiqubit coupler for the qubits associated with the face, and wherein the qubits and the multiqubit coupler of the associated face are operative according to a syndrome measurement circuit associated with the stabilizer operator to thereby retrieve an error syndrome of a quantum state of the data qubits associated with the stabilizer operator.

The quantum hardware according to the second aspect of the present invention is in particular configured for carrying out the method according to the first aspect of the present invention. Everything that has been said above in relation to the quantum hardware provided in the method according to the first aspect of the present invention also applies to the quantum hardware according to the second aspect of the present invention. In particular, the qubits may be superconducting qubits, in particular transmons in one example. Further, the multiqubit coupler may comprise at least one of a qubit, a waveguide, a resonator, a tunable coupler and/or a shunting capacitor. Furthermore, the quantum hardware may comprise measurement means to read out the error syndrome stored in the syndrome qubits. In one example, the quantum hardware does not comprise any further data or syndrome qubits than the ones mentioned above.

In one particular example, the quantum hardware may comprise means for driving the qubits and/or the multiqubit coupler and/or means for tuning at least one of the qubits and/or the multiqubit coupler. In one example, the qubits and/or the multiqubit coupler may be flux-tunable, and the quantum hardware may comprise means for applying a flux to the qubits and/or the multiqubit coupler. In one example, the quantum hardware may comprise means for applying a microwave pulse for driving of the qubits and/or the multiqubit coupler. All these techniques are known for superconducting qubits, resonators, tunable couplers, waveguides and shunting capacitors.

In one example, each multiqubit coupler may comprise a quantum mechanical two-level system with two quantum states separated by an energy gap. In this case, the qubits and the multiqubit coupler associated with each face may be operative to transfer a quantum state of the syndrome qubit to the multiqubit coupler and back, and to implement a two-qubit gate between each data qubit and the multiqubit coupler. I.e., the multiqubit coupler acts as a computational element in the example.

In another example, the qubits and the multiqubit coupler associated with each face may be operative to implement a two-qubit gate between the syndrome qubit and each of the data qubits associated with the face. In this embodiment, the multiqubit coupler functions as a mediator of the interaction between the syndrome qubit and the data qubits and not as an information storage.

The faces of the qubit lattice may be defined by sets of vertices that surround the face. For a face in the bulk, the vertices of the set of vertices may surround the face completely. At the boundary of the lattice, there may be faces that are only partially surrounded by the vertices of the set of vertices in one example. In particular, a data qubit in the bulk may my associated with a plurality of faces.

The two-dimensional qubit lattice is not limited to a special topology. The qubit lattice may be a regular lattice in one example, but the invention is not limited to this. In one example, the qubit lattice may be a square lattice, a hexagonal lattice, and octagonal lattice or a combination thereof.

In one example, the set of data qubits on which the stabilizer operator acts may consist of all qubits arranged at the vertices that define the face of the associated stabilizer operator. In another example, the set of data qubits on which the stabilizer operator acts may be a true subset of all qubits arranged at the vertices that define the face of the associated stabilizer operator.

The number of stabilizer operators associated with each face may be one, two, three or more in one example. In one example, each face may be associated with the same number of stabilizer operators, but the invention is not limited to this. In one example, there may be at least one face without an associated stabilizer operator. In one example, all stabilizer operators associated with the same face may only act on the same set of data qubits, and in particular on all qubits arranged at the vertices that define the face of the associated stabilizer operator.

In one example, there may be at least one face that is associated with more than one stabilizer operator. Then, in one example, the quantum hardware may comprise a single syndrome qubit associated with the face, and the qubits and the multiqubit coupler associated with the face may be operative to retrieve, for each stabilizer operator associated with the face, an error syndrome of a quantum state of the data qubits associated with the stabilizer operator.

However, the invention is not limited to this. In another embodiment of the quantum hardware according the second aspect of the present invention at least one face may be associated with at least two stabilizer operators, and wherein the quantum hardware comprises for each stabilizer operator a syndrome qubit associated with the face. Then, the qubits and the multiqubit coupler may be operative, for each stabilizer operator associated with the face, to retrieve an error syndrome of the data qubits associated with the stabilizer operator. For each stabilizer operator, retrieving the error syndrome comprises a readout of the syndrome qubit associated with the stabilizer operator. The quantum hardware of the embodiment allows to speed up the execution of the syndrome measurement circuit, as the measurement of two stabilizer operators may be carried out at least partially in parallel.

In another embodiment of the quantum hardware according to the second aspect of the present invention, the quantum hardware may further comprise for each syndrome qubit a flag qubit for retrieving an error in the operation of the qubits and the multiqubit coupler according to the syndrome measurement circuit, the flag qubit being associated with the face of the syndrome qubit, and wherein the qubits and the multiqubit coupler are operative to retrieve an error associated with the syndrome measurement circuit. In particular, the quantum hardware may comprise measurement means to read out the quantum state of each flag qubit.

The quantum hardware according to the embodiment allows to implement quantum error correction with an improved reliability as errors in the execution of the syndrome measurement circuit may be retrieved by use of the flag qubit. The quantum hardware may further comprise means to prepare each flag qubit in a predefined quantum state, e.g., the |+〉 state, and may further comprise measurement means to readout the quantum state of each of the flag qubits. In one example, the quantum hardware may only comprise the mentioned data, syndrome and flag qubits and no further qubits.

In another embodiment of the quantum hardware according to the second aspect of the present invention, all qubits and the multiqubit couplers may be are arranged in a two-dimensional arrangement, and wherein for each face the associated syndrome qubits and the multiqubit coupler are arranged within the face. In particular, the qubits and the multiqubit couplers may be arranged on a substrate in one example.

In another embodiment of the method according to the first aspect of the present invention, the quantum error correction code may comprise a plurality of stabilizer operators defined on a two-dimensional qubit lattice with vertices and faces defined by sets of vertices, wherein a data qubit is arranged at each of the vertices, each face is associated with the data qubits at the vertices that define the face, and each stabilizer operator is associated with one of the faces so as to act only on a set of the data qubits that are associated with the face, and wherein providing the quantum hardware may comprise providing the quantum hardware according to the second aspect of the present invention.

In the following, the invention is described in greater detail by way of example with reference to the drawings in which:
- Fig. 1a: is a schematic representation of a quantum hardware which comprises a plurality of qubits and a multiqubit coupler for the qubits of the plurality of qubits;
- Fig. 1b: is a schematic representation of a quantum hardware of the present invention with two syndrome qubits and a plurality of data qubits;
- Fig. 1c: is a schematic representation of another quantum hardware of the present invention with two syndrome qubits, two flag qubits, and a plurality of data qubits;
- Fig. 2: is an example of the quantum hardware shown in Fig. 1b, wherein the multiqubit coupler comprises a qubit;
- Fig. 3: is another example of the quantum hardware shown in Fig. 1b, wherein the multiqubit coupler comprises a resonator;
- Fig. 4: is another embodiment of a quantum hardware of the present invention wherein the multiqubit coupler and the qubits are operative to implement a two-qubit gate between each data qubit and the syndrome qubit;
- Fig. 5: is an example of a syndrome measurement circuit for two stabilizer operators of a quantum error correction code in an embodiment of the method according to the first aspect of the present invention;
- Fig. 6: is another example of a syndrome measurement circuit for two stabilizer operators of a quantum error correction code in an embodiment of the method according to the first aspect of the present invention;
- Fig. 7: is an example of a quantum circuit in an embodiment of the method according to the first aspect of the present invention, the quantum circuit comprising a syndrome measurement circuit for two stabilizer operators of a quantum error correction code, the quantum circuit being further configured to retrieve an error in the syndrome measurement circuit;
- Fig. 8: is a schematic representation of a portion of a quantum hardware according to an embodiment of the present invention;
- Fig. 9: is a schematic representation of a portion of a quantum hardware according to another embodiment of the present invention.

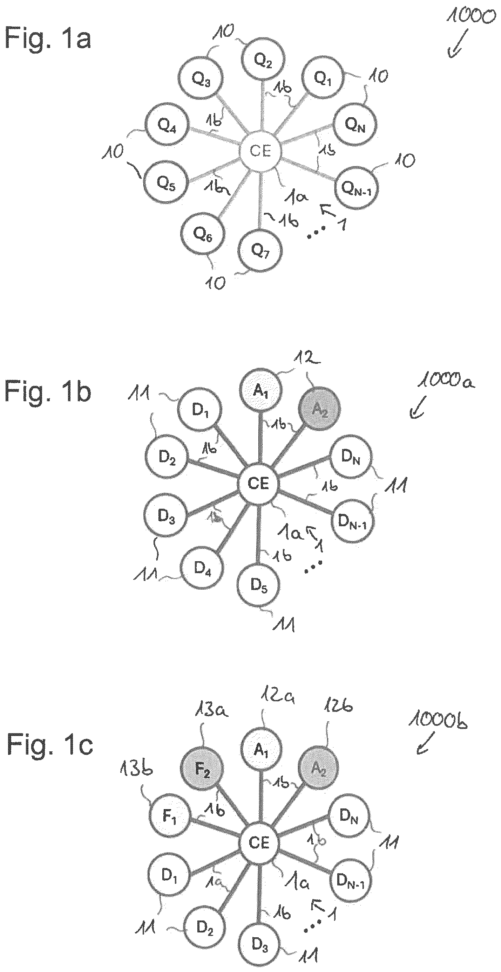

Figure 1a is a schematic representation of a quantum hardware 1000 which comprises a plurality of qubits 10 and a multiqubit coupler 1 with a central element 1a and a plurality of (tunable) couplers 1b for the qubits 10. The qubits 10 and the multiqubit coupler 1 are arranged in a star topology wherein the qubits 10 surround the multiqubit coupler 1 which is arranged at the center of the star topology. However, the present invention is not limited to this, and other spatial arrangements are conceivable. In one example, the qubits 10 may be superconducting qubits, for example transmons. In one example, the central element 1a of the multiqubit coupler 1 may comprise at least one of a qubit (for example, a transmon), a resonator, a waveguide, and/or a shunting capacitor.

Figure 1b is a schematic representation of a quantum hardware 1000a of the present invention which is an example of the quantum hardware 1000 of Figure 1a, wherein two of the qubits 10 are first and second syndrome qubits 12a, b, and the rest of the qubits are data qubits 11. The first and second syndrome qubits 12a, b are associated with first and second stabilizer operators of a QEC code. The multiqubit coupler 1 and the syndrome and data qubits 11, 12 are operative according to a syndrome measurement circuit associated with the first and second stabilizer operators to thereby retrieve an error syndrome of a quantum state of the data qubits 11 associated with the first and second stabilizer operator, respectively.

Figure 1c is a schematic representation of a quantum hardware 1000b of the present invention which is an example of the quantum hardware 1000 of Figure 1a, wherein two of the qubits are first and second syndrome qubits 12a, b, two other qubits are first and second flag qubits 13, and the rest of the qubits are data qubits 11. The first flag qubit 13a is associated with the first syndrome qubit 12a, and the second flag qubit 13b is associated with the second syndrome qubit 12b. The qubits 11, 12a, 12b, 13a, 13b and the multiqubit coupler 1 are operative to retrieve an error in the syndrome measurement circuit associated with the first (second) stabilizer operator.

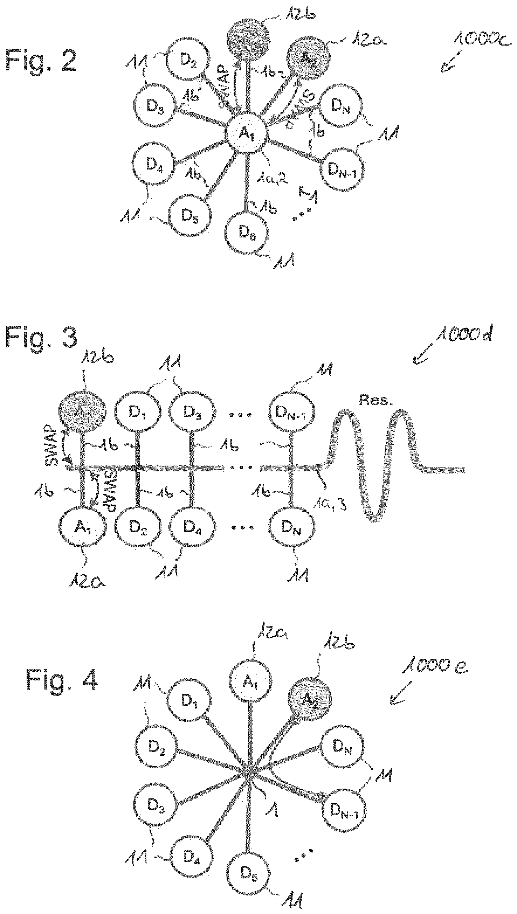

Figure 2 is a schematic representation of a quantum hardware 1000c which is an example of the quantum hardware 1000a shown in Figure 1b, wherein the central element 1a of the multiqubit coupler 1 comprises a qubit 2. There is connectivity between the qubit 2 of the multiqubit coupler 1 and the data and syndrome qubits 11, 12a, b due to the (tunable) couplers 1b arranged between the qubit 2 of the multiqubit coupler 1 and the respective data or syndrome qubit 11, 12a, b. The qubits 11, 12a, b and the multiqubit coupler 1 are operative to transfer a quantum state of the first and second syndrome qubits 12a, b to the qubit 2 of the multiqubit coupler 1 and back. For example, the syndrome qubits 12a, b and the multiqubit coupler 1 may be operative to implement a SWAP-like gate, in particular, a SWAP gate or an iSWAP gate between each of the first and second syndrome qubits 12a, b and the qubit 2 of the multiqubit coupler 1. Furthermore, the data qubits 11 and the multiqubit coupler 1 may be operative to implement a two-qubit gate, in particular, a two-qubit entangling gate, for example a CPHASE gate, between each of the data qubits 11 and the qubit 2 of the multiqubit coupler 1.

Figure 3 is a schematic representation of a quantum hardware 1000d which is an example of the quantum hardware 1000a shown in Figure 1b, wherein the central element 1a of the multiqubit coupler 1 comprises a resonator 3. The resonator 3 supports a bosonic mode which defines a quantum mechanical two-level system with first and second quantum states defined by the mode being empty or occupied. As explained above, the multiqubit coupler 1 further comprises for each data and syndrome qubit 11, 12a, b a (tunable) coupler 1b for coupling the respective qubit 11, 12a, b and the resonator 3. The first and second syndrome qubits 12a, 12b and the multiqubit coupler 1 are operative to transfer a quantum state of each of the first and second syndrome qubits 12a, 12b to the resonator 3 and back. In one example, this transfer may correspond to a SWAP-like gate, in particular a SWAP gate or an iSWAP-gate. Furthermore, the data qubits 11 and the resonator 3 are operative to implement a two-qubit gate, in particular, a two-qubit entangling gate, in particular, a CPHASE gate, between each of the data qubits 11 and the resonator 3. In one example, the qubits 11, 12a, b may be flux-tunable, and applying the SWAP-like gate and/or the CPHASE gate may comprise applying a flux pulse to the respective qubit. As the multiqubit coupler 1 also comprises a tunable coupler, implementing the SWAP-like gate and/or CPHASE gate may comprise applying a flux pulse to the tunable coupler in synchronization with applying a flux pulse to the respective qubit 11, 12a, b.

Figure 4 is a schematic representation of another embodiment of a quantum hardware 1000e of the present invention, wherein the multiqubit coupler 1 and the qubits 11, 12a, b are operative to implement a two-qubit gate, in particular a two-qubit entangling gate, between each data qubit 11 and each of the first and second syndrome qubits 12a, 12b. I.e., the multiqubit coupler 1 acts as a mediator of an interaction between pairs of the qubits. In one example, this interaction may take the form of an electrostatic interaction or of an electromagnetic interaction. The multiqubit coupler 1 may comprise a resonator, and for each data or syndrome qubit 11, 12a, b a tunable coupler for coupling to the resonator. Then, the two-qubit gate may be implemented between each data qubit 11 and the first (second) syndrome qubit 12a (12b) by coupling the data qubit 11 and the first (second) syndrome qubit 12a (12b) to the resonator by tuning the tunable couplers, and the resonator 3 may be configured to mediate the interaction between the two qubits 11, 12a, b. In another example, the multiqubit coupler 1 may comprise a shunting capacitor. Implementing the two-qubit gate may then comprise driving and tuning the two qubits between which a two-qubit gate is to be implemented.

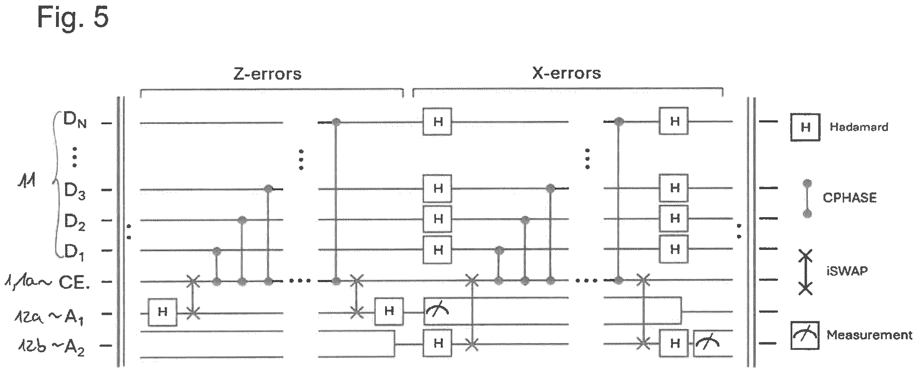

Figure 5 is an example of a syndrome measurement circuit for two stabilizer operators of a quantum error correction code in an embodiment of the method according to the first aspect of the present invention. This syndrome measurement circuit may e.g. be executed on one of the quantum hardwares, 1000a, b, c, d of Figs. 1b, 1c, 2 and 3. Each of the two stabilizer operators is acting on N data qubits 11 (denoted by *D*₁..., *D_{N}*). The first stabilizer operator is a Z-stabilizer operator of the form *Z*₁ ⊗ ... ⊗ *Z_{N}*, wherein *Zⱼ* is the Pauli-Z operator acting on the j-th data qubit *Dⱼ*, and the second stabilizer operator is an X-stabilizer operator of the form *X*₁ ⊗ *..*. ⊗ *X_{N}*, wherein *Xⱼ* is the Pauli-X operator acting on the j-th data qubit *Dⱼ.* A first syndrome qubit 12a (denoted by *A*₁ in the figure) is associated to the first stabilizer operator, and a second syndrome qubit 12b (denoted by *A*₂ in the figure) is associated to the second stabilizer operator. The syndrome measurement circuit requires a multiqubit coupler 1 which acts as a computational element that comprises two quantum-mechanical states separated by an energy gap (e.g., provided by the central element 1a). In one example, the multiqubit coupler 1 comprises a qubit which acts as the quantum mechanical two-level system. In another example, the multiqubit coupler 1 comprises a resonator or a waveguide which acts as the quantum mechanical two-level system. As one may take from Figure 5, the syndrome measurement circuit first measures the Z errors according to the Z-stabilizer operator and then measures the X errors according to the X-stabilizer operator.

The method for quantum error detection and/or correction according to the embodiment with the syndrome measurement circuit shown in Fig. 5 comprises providing a quantum hardware, for example the quantum hardware shown in Figures 1b, 1c, 2 or 3. The quantum hardware comprises N≥2 data qubits 11, first and second syndrome qubits 12a, b and a multiqubit coupler 1 for the syndrome and data qubits 11, 12a, b. The method comprises operating the qubits 11, 12a, b and the multiqubit coupler 1 according to the syndrome measurement circuit shown in Figure 5 which is associated with the Z-stabilizer operator and the X-stabilizer operator introduced above. According to the syndrome measurement circuit shown in Figure 5, the qubits 11, 12a, b and the multiqubit coupler 1 are operated as follows:

First, the first and second syndrome qubits 12a, b are each prepared in a predetermined state, e.g., the state |0〉. Then, a Hadamard gate H is applied to the first syndrome qubit 12a to thereby prepare the first syndrome qubit 12a in the |+〉 state. Then, the |+〉 state of the first syndrome qubit 12a is transferred to the multiqubit coupler 1 (e.g., to the central element 1a of the multi-qubit coupler) by an application of an iSWAP gate. Thereafter, a CPHASE gate is successively implemented between the multiqubit coupler 1 and each data qubit 11. Thereby, the quantum state of the multiqubit coupler 1 is adjusted in accordance with an error syndrome of the data qubits 11 associated with the Z-stabilizer operator. Thereafter, the quantum state of the multiqubit coupler 1 is transferred back to the first syndrome qubit 12a by application of an iSWAP gate, and a Hadamard gate is applied to the first syndrome qubit 12a before the state of the syndrome qubit is measured to thereby read out the error syndrome associated with the Z-stabilizer operator. In this way, the error syndrome associated with the Z-stabilizer operator is retrieved. In parallel with the measurement, a Hadamard gate is applied to the second syndrome qubit 12b to prepare the second syndrome qubit 12b in the |+〉 state. Then, the |+〉 state of the second syndrome qubit 12b is transferred to the multiqubit coupler 1. At the same time, a Hadamard gate is applied to each of the data qubits to allow for a measurement of the X errors. Thereafter, a CPHASE gate is successively applied between the multiqubit coupler 1 and each of the data qubits 11 to thereby adjust the quantum state of the multiqubit coupler 1 in accordance with an error syndrome of the data qubits 11 associated with the X-stabilizer operator. Thereafter, the quantum state of the multiqubit coupler 1 is transferred to the second syndrome qubit 12b by application of an iSWAP gate. A Hadamard gate is applied to each of the data qubits 11 to thereby undo the previously applied Hadamard gates. At the same time, a Hadamard gate is applied to the second syndrome qubit 12b, and the state of the second syndrome qubit 12b is measured to thereby read out the error syndrome associated with the X-stabilizer operator. In this way, the error syndrome associated with the X-stabilizer operator is retrieved.

The syndrome measurement circuit shown in Figure 5 minimizes the number of iSWAP gates that are required by grouping all the CPHASE gates for each stabilizer operator. Thereby, a better fidelity for the error syndrome extraction is achieved. Applying the iSWAP gates constitutes a small overhead to the quantum error correction cycle that can be a source of error. However, the impact of this extra error is limited, as it does not grow with the number of data qubits and therefore becomes negligible for stabilizer operators with high weight. It is further possible to change the order of the CPHASE gates by introducing additional iSWAP gates. The quantum gate sequence that gives the best performance may be different as a function of the physical characteristics of each element of the quantum hardware and effects of the quantum gates. For example, gate errors and cross-talk may be taken into account. In the syndrome measurement circuit of Fig. 5, the measurement of one stabilizer operator happens at the same time as a sequence of another stabilizer operator. This configuration can save time or lead to better performance. But in some other circumstances (ex: different gate time or different cross talk of the gate) it might be advantageous to group all the measurements of the syndrome qubits together, at the end of the cycle. The configuration that gives the best performance may be different as a function of the physical characteristics of each element.

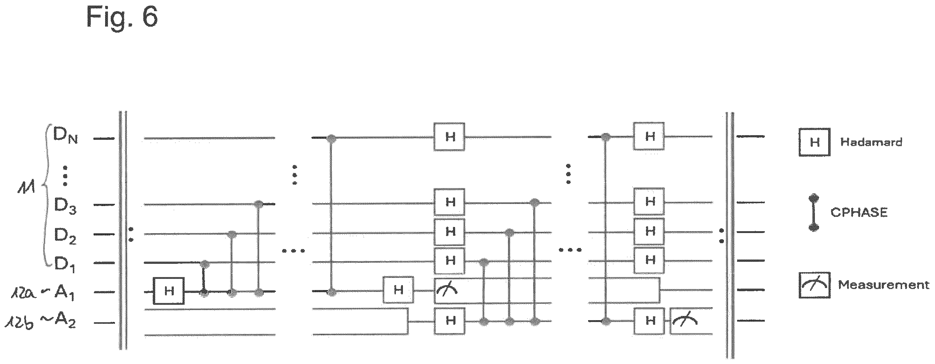

Figure 6 is another example of a syndrome measurement circuit for the first and second stabilizer operators of the quantum error correction code introduced above in another embodiment of the method according to the first aspect of the present invention. As introduced above, the first stabilizer operator is the Z-stabilizer operator, and the second stabilizer operator is the X-stabilizer operator. Each of the two stabilizer operators is acting on N data qubits *D*₁, *..., D_{N}.* A first syndrome qubit 12a is associated with the first stabilizer operator, and a second syndrome qubit 12b is associated with the second stabilizer operator.

The method for quantum error detection and/or correction with the syndrome measurement circuit shown in Fig. 6 according to the embodiment comprises providing a quantum hardware, e.g., the quantum hardware shown in Figure 4. The quantum hardware comprises N≥2 data qubits 11, first and second syndrome qubits 12a, b, and a multiqubit coupler 1 for the syndrome and data qubits 11, 12a, b. The qubits and the multiqubit coupler are operative to implement a two-qubit gate between each of the first and second syndrome qubits 12a, b and each of the data qubits mediated by the multiqubit coupler. In this case, no transfer of the state of the syndrome qubit to the multiqubit coupler is required. Rather, a two-qubit gate is directly implemented between each of the data qubits and the syndrome qubit via the multiqubit coupler. According to the syndrome measurement circuit shown in Fig. 6, the qubits 11, 12a, b and the multiqubit coupler are operated as follows:

First, the first and second syndrome qubits 12a, b are each prepared in a predetermined quantum state, e.g., the computational zero state |0〉. Then, a Hadamard gate is applied to the first syndrome qubit 12a. Next, a CPHASE gate is applied between the first syndrome qubit 12a and each of the data qubits 11. Thereby, the quantum state of the first syndrome qubit 12a is adjusted in accordance with an error syndrome of the quantum state of the data qubits 11 associated with the Z-stabilizer operator. Thereafter, another Hadamard gate is applied to the first syndrome qubit 12a and the quantum state of the first syndrome qubit 12a is measured to thereby read out the error syndrome associated with the Z-stabilizer operator. In this way, the error syndrome associated with the Z-stabilizer operator is retrieved. In parallel with this measurement, a Hadamard gate is applied to the second syndrome qubit 12b. At the same time, a Hadamard gate is applied to each of the data qubits 11 to thereby allow for a measurement of the X errors. Thereafter, a CPHASE gate is successively applied between each of the data qubits 11 and the second syndrome qubit 12b to thereby adjust the quantum state of the second syndrome qubit 12b in accordance with an error syndrome of the data qubits 11 associated with the X-stabilizer operator. Thereafter, a Hadamard gate is applied to each of the data qubits 11 to thereby undo the previously applied Hadamard gates. At the same time, a Hadamard gate is applied to the second syndrome qubit 12b and the quantum state of the second syndrome qubit 12b is measured to thereby read out the error syndrome associated with the X-stabilizer operator. In this way, the error syndrome associated with the X-stabilizer operator is retrieved.

The method for quantum error detection and/or correction based on the syndrome measurement circuit as shown in Figure 6 does not require an application of any iSWAP gates. The direct application of CPHASE gates between each of the data qubits 11 and the syndrome qubits 12a, b offers advantages that can lead to better quantum error correction performances such as more freedom in the order of CPHASE gates and reduction of the circuit depth as no iSWAP gates are needed. As has been explained above, the direct coupling between the data and syndrome qubits may be obtained with a multiqubit coupler that comprises a resonator, a qubit or a reactive element such as a shunting capacitor.

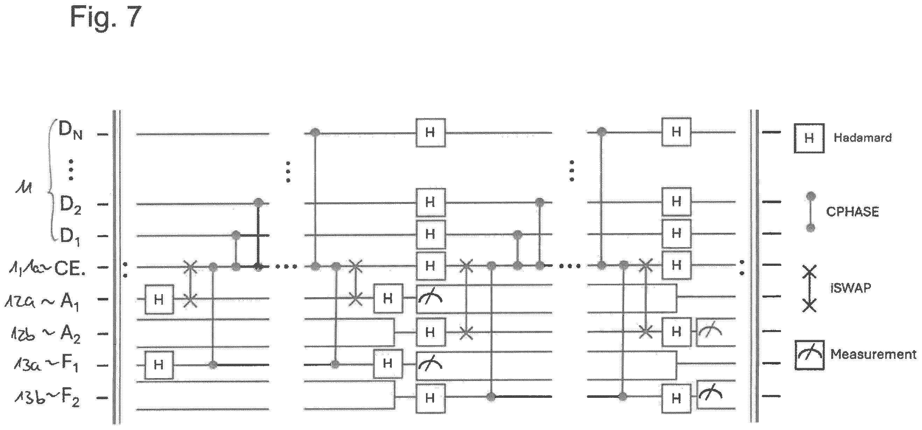

Figure 7 is an example of a quantum circuit in an embodiment of the method according to the first aspect of the present invention, the quantum circuit comprising a syndrome measurement circuit for the two stabilizer operators of the quantum error correction code introduced above, and the quantum circuit is configured to retrieve an error in the syndrome measurement circuit. In particular, the quantum circuit as shown in Figure 7 comprises the syndrome measurement circuit shown in Figure 5.

The method for quantum error detection and/or correction according to the embodiment with the quantum circuit shown in Fig. 7 comprises providing a quantum hardware, e.g., the quantum hardware shown in Figure 1c. The quantum hardware comprises N≥2 data qubits 11, first and second syndrome qubits 12a, b and first and second flag qubits 13a, b. The Z-stabilizer operator is associated to the first syndrome qubit 12a and the X-stabilizer operator is associated to the second syndrome qubit 12b. The first flag qubit 13a is associated to the first syndrome qubit 12a, and the second flag qubit 13b is associated to the second syndrome qubit 12b. The first and second flag qubits 13a, b are for detecting errors in the syndrome measurement circuit associated with the first and second stabilizer operators, respectively. As one may take from Figure 7, the quantum circuit requires a multiqubit coupler 1 which comprise a computational element with two quantum mechanical states that are separated by an energy gap (e.g., provided by the central element 1a), for example a qubit or a resonator/waveguide. The method for quantum error detection and/or correction according to the embodiment comprises operating the qubits and the multiqubit coupler according to the quantum circuit as shown in Figure 7 as follows:

First, the syndrome and flag qubits 12a, b, 13a, b are prepared in a predetermined quantum state, e.g., the computational zero state |0〉. Then, a Hadamard gate is applied to the first syndrome qubit 12a and the first flag qubit 13a. The state of the first syndrome qubit 12a is then transferred to the multiqubit coupler 1 by application of an iSWAP gate between the first syndrome qubit 12a and the multiqubit coupler 1. Afterwards, a first CPHASE gate is applied between the multiqubit coupler 1 and the first flag qubit 13a. Afterwards, a CPHASE gate is applied successively between the multiqubit coupler 1 and each of the data qubits 11, to thereby adjust the quantum state of the multiqubit coupler 1 in accordance with an error syndrome of the data qubits associated with the Z-stabilizer operator. Thereafter, a second CPHASE gate is applied between the multiqubit coupler 1 and the first flag qubit 13a. The first and second CPHASE gates applied between the multiqubit coupler 1 and flag qubit 13a adjust the quantum state of the first flag qubit 13a in accordance with an error in the syndrome measurement circuit associated with the first stabilizer operator. Thereafter, the quantum state of the multiqubit coupler 1 is transferred to the first syndrome qubit 12a, a Hadamard gate is applied to the first syndrome qubit 12a and the quantum state of the first syndrome qubit 12a is measured to thereby read out the error syndrome associated with the first stabilizer operator. At the same time, a Hadamard gate is applied to the first flag qubit 13a and the state of the first flag qubit 13a is measured to thereby detect the presence of absence of an error in the syndrome measurement circuit associated with the first stabilizer operator.

Simultaneously with the measurements of the first syndrome qubit 12a and the first flag qubit 13a, a Hadamard gate is applied to each of the data qubits to thereby allow for a measurement of the X error syndrome. Also at the same time, a Hadamard gate is applied to the second syndrome qubit 12b and the second flag qubit 13b. Thereafter, the quantum state of the second syndrome qubit 12b is transferred to the multiqubit coupler 1 by applying an iSWAP gate. Thereafter, a first CPHASE gate is applied between the second flag qubit 13b and the multiqubit coupler 1. Thereafter, a CPHASE gate is successively applied between each of the data qubits 11 and the multiqubit coupler 1 to thereby adjust the quantum state of the multiqubit coupler 1 in accordance with an error syndrome of the data qubits 11 associated with the X-stabilizer operator. Then, a second CPHASE gate is applied between the multiqubit coupler 1 and the second flag qubit 13b. The first and second CPHASE gates applied between the multiqubit coupler 1 and the second flag qubit 13b adjust a quantum state of the second flag qubit 13b in accordance with an error in the syndrome measurement circuit associated with the second stabilizer operator. Thereafter, the quantum state of the multiqubit coupler 1 is transferred to the second syndrome qubit 12b by application of an iSWAP gate, a Hadamard gate is applied to the second syndrome qubit 12b and the quantum state of the second syndrome qubit 12b is measured to read out error syndrome associated with the second stabilizer operator. At the same time, a Hadamard gate is applied to each of the data qubits 11 to thereby undo the previously applied Hadamard gates. Also at the same time, a Hadamard gate is applied to the second flag qubit 13b and the quantum state of the second flag qubit 13b is measured to thereby detect the presence or absence of an error in the syndrome measurement circuit associated with the second stabilizer operator.

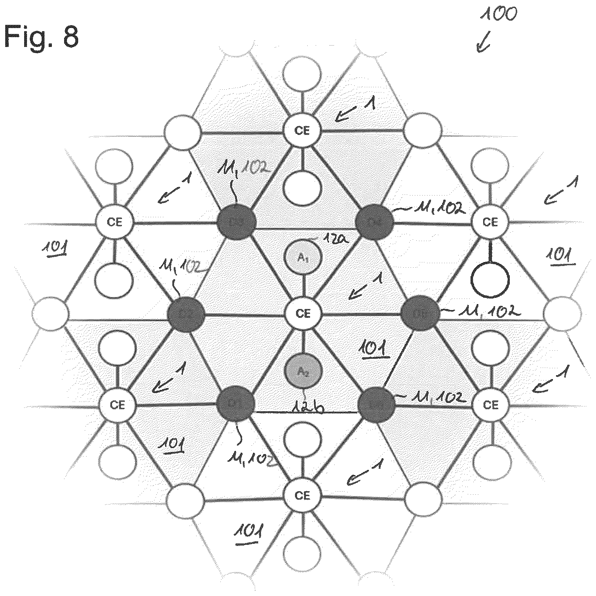

Figure 8 is a schematic representation of a portion of a quantum hardware 100 according to an embodiment of the present invention. The quantum hardware 100 is for quantum error correction according to the 6.6.6 colour code. This code comprises for each face 101 of a two-dimensional hexagonal lattice with vertices 102 and faces 101, wherein a data qubit 11 is arranged at each of the vertices 102, two stabilizer operators associated with the face 101. The first stabilizer operator is a Z-stabilizer operator that acts on the six data qubits 11 arranged at the vertices 102 surrounding the face 101 and is of the form ⊗_{*v*ⱼ∈}*_{∂Fₖ} Zⱼ,* wherein *v_{y},j =* 1, ... ,6 are the six vertices on the boundary *∂Fₖ* of the face *Fₖ,* and *Zⱼ* is the Pauli-Z operator acting on the qubit arranged at the vertex *vⱼ.* The second stabilizer operator is an X-stabilizer operator that acts on the six data qubits 11 arranged at the vertices 102 surrounding the face 101 and is of the form ⊗_{*v*ⱼ∈}*_{∂Fₖ} Xⱼ,* wherein *vⱼ*, *j* = 1, ...,6 are the six vertices on the boundary *∂Fₖ* of the face *Fₖ,* and *Xⱼ* is the Pauli-X operator acting on the qubit arranged at the vertex *vⱼ*. Furthermore, the quantum hardware 100 comprises for each face 101 first and second syndrome qubits 12a, 12b arranged at the face 101, wherein the first syndrome qubit 12a is associated with the first stabilizer operator, and the second syndrome qubit 12b is associated with the second stabilizer operator. The quantum hardware 100 further comprises for each face 101 a multiqubit coupler 1 for the qubits 11, 12a, b associated with the face and arranged at the face so as to be surrounded by the data qubits 11 associated with the face 101. For each stabilizer operator associated with a face, the data and syndrome qubits 11, 12a, b and the multiqubit coupler 1 are operative according to a syndrome measurement circuit associated with the first and second stabilizer operators to thereby retrieve an error syndrome of a quantum state of the data qubits 11 associated with the first and second stabilizer operators, respectively. The syndrome measurement circuit may for example be or may comprise one of the syndrome measurement circuits shown in Figures 5 to 7 above.

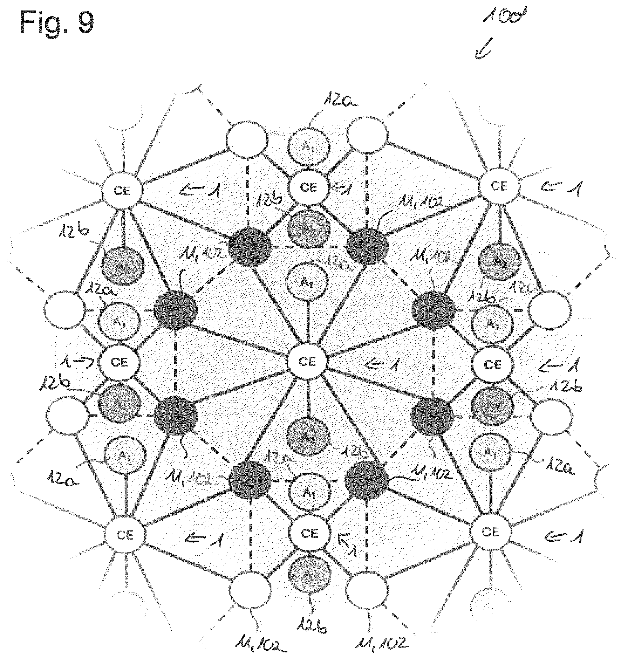

Figure 9 is a schematic representation of a portion of a quantum hardware 100' according to another embodiment of the present invention. The quantum hardware 100' shown in Fig. 9 is for a quantum error correction according to the 4.8.8 color code. This code is defined on a patch of a 4.8.8 (square-octagon) tiling. That is, the 4.8.8 code comprises a plurality of stabilizer operators defined on a two-dimensional qubit lattice with vertices 102 and faces 101, wherein the faces 101 form a repeating pattern of octagons 101a and squares 101b. The quantum hardware 100' comprises a plurality of data qubits 11 arranged at the vertices 102 of the two-dimensional qubit lattice. Each face 101 is associated with two stabilizer operators. For the octagon (square), the first stabilizer operator is a Z-stabilizer operator that acts on the eight (four) data qubits 11 arranged at the eight (four) vertices 101 surrounding the face and is of the form ⊗_{*v*ⱼ∈}*_{∂Fₖ} Zⱼ,* wherein *vⱼ, j* = 1, ...,8, (j = 1, ..., 4) are the eight (four) vertices on the boundary *∂Fₖ* of the face *Fₖ,* and *Zⱼ* is the Pauli-Z operator acting on the qubit arranged at the vertex *vⱼ.* For the octagon (square), the second stabilizer operator is an X-stabilizer operator that acts on the eight (four) data qubits 11 arranged at the eight (four) vertices 101 surrounding the face and is of the form ⊗_{*v*ⱼ∈}*_{∂Fₖ} Xⱼ,* wherein *vⱼ, j* = 1, ... ,8, (j = 1, ..., 4) are the eight (four) vertices on the boundary *∂Fₖ* of the face *Fₖ,* and *Xⱼ* is the Pauli-Z operator acting on the qubit arranged at the vertex *vⱼ.* Furthermore, the quantum hardware 100' comprises for each stabilizer operator first and second syndrome qubits 12a, b associated with the face 101 and arranged at the face 101. The first syndrome qubit 12a is associated with the first stabilizer operator, and the second syndrome qubit 12b is associated with the second stabilizer operator. Furthermore, the quantum hardware 100' comprises for each face 101 a multiqubit coupler for the qubits 11, 12a, 12b associated with the face and arranged at the face so as to be surrounded by the data qubits 11 associated with the face 101. For each stabilizer operator, the qubits 11, 12a, b and the multiqubit coupler 1 of the associated face are operative according to a syndrome measurement circuit associated with the first and second stabilizer operators to thereby retrieve an error syndrome of a quantum state of the data qubits 11 associated with the first and second stabilizer operators, respectively. The syndrome measurement circuit may for example be or may comprise one of the syndrome measurement circuits shown in Figures 5 to 7. The order and timing of each two-qubit gate needs to be arranged to exclude having to do two operations with the same qubit simultaneously.

The embodiments of the quantum hardware 100, 100' shown in Figs. 8 and 9 may have one of the following optional features in one example. In one example, the syndrome and data qubits 11, 12a, b are superconducting qubits, in particular transmons. In one example, the multiqubit coupler 1 comprises a qubit or a resonator. Furthermore, the multiqubit coupler 1 may comprise for each qubit 11, 12a, b associated with the face (that is, six data qubits 11 and the two syndrome qubits 12a, b for the quantum hardware 100 of Fig. 8 and eight or four data qubits 11 and two syndrome qubits 12a, b for the quantum hardware 100' shown in Fig. 9) a tunable coupler for coupling the qubit or the waveguide/resonator of the multiqubit coupler 1 and the respective data or syndrome qubit 11, 12a, b. In particular, the qubits 11, 12a, b and the multiqubit couplers 1 may be arranged in a two-dimensional configuration, in particular on a substrate. Furthermore, the quantum hardware 100, 100' may comprise for each syndrome qubit a flag qubit (not shown) arranged at the face of the syndrome qubit. The quantum hardware 100, 100' may be further operative to retrieve an error associated with the syndrome measurement circuit.

## Claims

1. A method for quantum error detection and/or correction according to a quantum error correction code that comprises at least one stabilizer operator acting on at least two data qubits (11), the method comprising:
providing a quantum hardware (100, 100', 1000, 1000a, b, c, d, e) which comprises the at least two data qubits (11), a syndrome qubit (12a, b) and a multiqubit coupler (1) for the qubits (11, 12a, b);
operating the qubits (11, 12a, b) and the multiqubit coupler (1) according to a syndrome measurement circuit associated with the at least one stabilizer operator to thereby retrieve an error syndrome of a quantum state of the data qubits (11) associated with the at least one stabilizer operator.

2. The method according to claim 1, wherein the multiqubit coupler (1) comprises at least one of a qubit (2), a resonator (3), a waveguide, a tunable coupler and/or a shunting capacitor and/or the qubits (11, 12a, b, 13a, b) are superconducting qubits.

3. The method according to claim 1 or 2, wherein the quantum error correction code comprises at least one further stabilizer operator acting on a set of the data qubits (11) of the at least two data qubits (11), wherein the quantum hardware comprises a further syndrome qubit (12a, b) associated with the at least one further stabilizer operator, and operating the qubits (11) and the multiqubit coupler (1) comprises retrieving an error syndrome of a quantum state of the data qubits (11) associated with the at least one further stabilizer operator.

4. The method according to any one of the preceding claims, wherein operating the qubits (11, 12a, b, 13a, b) and the multiqubit coupler (11) comprises individually manipulating a quantum state of one of the qubits (11, 12a, b, 13a, b) and/or the multiqubit coupler (1) and/or modulating a coupling strength between one of the qubits (11, 12a, b, 13a, b) and the multiqubit coupler (1).

5. The method according to any one of the preceding claims, wherein retrieving the error syndrome comprises transferring a quantum state of the syndrome qubit (12a, b) to the multiqubit coupler (1), successively implementing a two-qubit gate between the multiqubit coupler (1) and each of the at least two data qubits (11), transferring the quantum state of the multiqubit coupler (1) back to the syndrome qubit (12a, b) and measuring the quantum state of the syndrome qubit (12,a, b).

6. The method according to any one of the preceding claims, wherein retrieving the error syndrome comprises successively implementing a two-qubit gate between the syndrome qubit (12a, b) and each of the at least two data qubits (11) mediated by the multiqubit coupler (1).

7. The method according to any one of the preceding claims, wherein the quantum hardware (100, 100', 1000, 1000a, b, c, d, e) comprises for each syndrome qubit (12a, b) an associated flag qubit (13a, b) for retrieving an error in the operation of the qubits (11, 12a, b) and the multiqubit coupler (1) according to the syndrome measurement circuit, and wherein the method further comprises operating the qubits (11, 12a, b, 13a, b) and the multiqubit coupler (1) to thereby retrieve an error associated with the syndrome measurement circuit.

8. The method according to claim 7, wherein retrieving the error associated with the syndrome measurement circuit comprises transferring the quantum state of the syndrome qubit (12a, b) to the multiqubit coupler (1) and implementing a two-qubit gate between the multiqubit coupler (1) and the flag qubit (13a, b).

9. The method according to claim 7 or 8, wherein retrieving the error associated with the syndrome measurement circuit comprises implementing a two-qubit gate between the syndrome qubit (12a, b) and the flag qubit (13a, b) mediated by the multiqubit coupler (1).

10. The method according to any one of the preceding claims, wherein the quantum error correction code is a color code, a quantum low density parity check code, a subsystem code or a Floquet code.

11. A quantum hardware (100, 100') for quantum error correction according to a quantum error correction code that comprises a plurality of stabilizer operators defined on a two-dimensional qubit lattice with vertices (102) and faces (101) defined by the sets of vertices (102), wherein a data qubit (11) is arranged at each of the vertices (102), each face (101) is associated with the data qubits (11) at the vertices that define the face (101), and each stabilizer operator is associated with one of the faces (101) so as to act only on a set of the data qubits (11) that are associated with the face (101), **characterized in that** the quantum hardware (100, 100') comprises a plurality of data qubits (11) arranged according to the qubit lattice and further comprises for each face (102) associated with a stabilizer operator a syndrome qubit (12a, b) and a multiqubit coupler (1) for the qubits (11, 12a, b) associated with the face (101), and wherein the qubits (11, 12a, b) and the multiqubit coupler (1) of the associated face (101) are operative according to a syndrome measurement circuit associated with the stabilizer operator to thereby retrieve an error syndrome of a quantum state of the data qubits (11) associated with the stabilizer operator.

12. The quantum hardware according to claim 11, wherein at least one face (101) is associated with at least two stabilizer operators, and wherein the quantum hardware (100, 100') comprises for each stabilizer operator a syndrome qubit (12a, b) associated with the face (101).

13. The quantum hardware (100, 100') according to claim 11 and 12 wherein the quantum hardware (100, 100') further comprises for each syndrome qubit (12a, b) a flag qubit (13a, b) for retrieve an error in the operation of the qubits (11, 12a, b) and the multiqubit coupler (1) according to the syndrome measurement circuit, the flag qubit (13a, b) being associated with the face (101) of the syndrome qubit (12a, b), and wherein the qubits (11, 12a, b, 13a, b) and the multiqubit coupler (1) are operative to retrieve an error associated with the syndrome measurement circuit.

14. The quantum hardware (100, 100') according to any of claims 11-13, wherein all qubits (11, 12a, b, 13a, b) and the multiqubit couplers (1) are arranged in a two-dimensional arrangement, and wherein for each face (101) the associated syndrome qubits (12a, b) and the multiqubit coupler (1) are arranged within the face.

15. The method according to any one of claims 1-10, wherein the quantum error correction code comprises a plurality of stabilizer operators defined on a two-dimensional qubit lattice with vertices (102) and faces (101) defined by sets of vertices, wherein a data qubit (11) is arranged at each of the vertices (102), each face (101) is associated with the data qubits (11) at the vertices (102) that define the face (101), and each stabilizer operator is associated with one of the faces (101) so as to act only on a set of the data qubits (11) that are associated with the face (101), and wherein providing the quantum hardware (100, 100') comprises providing the quantum hardware (100, 100') according to anyone of claims 11-14.
